# EUROPÄISCHE PATENTSCHRIFT

(11) **EP 0 639 883 B1**
(45) Veröffentlichungstag und Bekanntmachung des Hinweises auf die Patenterteilung: **12.03.1997**
(21) Anmeldenummer: 94111522.2
(22) Anmeldetag: 23.07.1994
(51) Int. Cl.: H02K 9/10

(54) **Gasgekühlte elektrische Maschine**
Gas-cooled electric machine
Machine électrique refroidie par un gaz

(30) Priorität: 17.08.1993 CH 2449/93
(43) Veröffentlichungstag der Anmeldung: 22.02.1995
(73) Patentinhaber: ASEA BROWN BOVERI AG, 5401 Baden (CH)
(72) Erfinder: Iseli, Markus, Dr., CH-5243 Mülligen (CH); Koppetsch, Lothar, D-68309 Mannheim Vogelstang (DE); Zimmermann, Hans, CH-8617 Mönchaltorf (CH)

(56) Entgegenhaltungen:
- EP-A- 0 279 064
- DE-C- 720 154
- DE-C- 2 758 880
- BROWN BOVERI TECHNIK 3-86, Seiten 133-138 * Seite 135, Bild 3 *
- SOVIET INVENTIONS ILLUSTRATED, El Sektion, Woche 8708 DERWENT PUBLICATIONS LTD., London; & SU-A-1241 355 (LEND ELEKTROSILA)

## Beschreibung

### TECHNISCHES GEBIET

Die Erfindung bezieht sich auf eine elektrische Maschine mit einem Gehäuse, einem in diesem Gehäuse angeordnetem Stator mit in Nuten am Innenumfang angeordnetem indirekt gekühlten Statorwicklungsleitern und einem Rotor, wobei der Blechkörper des Stators aus einzelnen, durch Distanzstege voneinander beabstandeten Teilblechpaketen aufgebaut ist und die Zwischenräume zwischen zwei aufeinanderfolgenden Teilblechpaketen radial verlaufende Kühlschlitze bilden, und die Kühlschlitze ringförmige Luftspalträume am Innenumfang des Statorblechpakets mit Kammerräumen verbinden, die zwischen dem Aussenumfang des Statorblechkörpers und dem Gehäuse gelegen sind, welche Kammern Kaltgaskammern umfassen, die von kaltem Kühlgas beaufschlagbar sind, und welche Kammern Heissgaskammern umfassen, in welche erwärmtes Kühlgas aus den besagten Kühlschlitzen radial auswärts gerichtet einströmt, welche Heissgaskammern mit Kühlern in Verbindung stehen, und wobei Kühlgasfördermittel und Kühlgasleiteinrichtungen an beiden Maschinenenden vorgesehen sind, welche das gekühlte Gas als Kaltgas den Kaltgaskammern zuleiten und das aufgewärmte Kühlgas aus den Heissgaskammern wieder absaugen.

Eine gasgekühlte elektrische Maschine mit diesen Merkmalen ist beispielsweise aus "Brown Boveri Technik", 3/86, Seiten 133 - 138, insbesondere Bild 3 auf Seite 135, bekannt.

### TECHNOLOGISCHER HINTERGRUND UND STAND DER TECHNIK

Prinzip der sogenannten indirekten Kühlung ist es, die in den Statorwicklungsstäben entstehenden Verluste an das Kühlmedium (Wasserstoff oder Luft) abzugeben. Der hauptsächliche Wärmefluss findet dabei vom Stabkupfer über die Isolation in den Zahnbereich des Statorblechkörpers statt. Von den Statorzähnen wird die Wärme an das Kühlmedium abgegeben.

Die Grenzen der Aufwärmung sind dabei durch die Temperaturempfindlichkeit der Isolation und darüber hinaus durch entsprechende Maximaltemperaturen vorgegeben, welche in Normen durch verschiedene Isolationsklassen festgelegt sind (ANSI, IEC).

Infolge der relativ grossen Temperaturdifferenz zwischen dem in die Isolation eingebetteten Statorkupfer und der Aussenschicht der Isolation ist die maximale Leistung eines indirekt gasgekühlten Turbogenerators mit klassischem Kühlprinzip begrenzt.

Es hat daher nicht an Vorschlägen gefehlt, die Kühlung zu verbessern, wobei sich diese Bemühungen hauptsächlich auf die tensivierung der Kühlung im mittigen Maschinenbereich konzentrierten.

So wird in der EP-B-0 279 064 eine gasgekühlte elektrische Maschine beschrieben, bei welcher die Heissgaskammern im mittleren Abschnitt der Maschine über separate Leitungen unter Umgehung der endseitigen Warmgaskammern direkt mit den Kühlern verbunden sind. Auf diese Weise wird eine Vermischung des erwärmten Kühlgases aus den mittigen Heissgaskammern mit demjenigen aus den endseitigen Heissgasräumen verhindert, und es besteht die Möglichkeit, die Volumenströme durch die einzelnen Kühlschlitze und der ihnen zugeordneten Luftspalt- und Kammerräume so aufzuteilen, dass eine fast vollständige Nivellierung des Temperaturprofils in Maschinenlängsrichtung resultiert.

Diese Massnahme hat sich bei Neukonstruktionen bestens bewährt. Bei bereits in Betrieb befindlichen Maschinen ist sie jedoch nur mit erheblichem Aufwand durchführbar.

### KURZE DARSTELLUNG DER ERFINDUNG

Aufgabe der Erfindung ist es, eine gasgekühlte elektrische Maschine der eingangs genannten Gattung zu schaffen, die ohne bauliche Eingriffe in die eigentliche Maschine eine wesentliche Vergleichmässigung der Kühlwirkung ermöglicht.

Diese Aufgabe wird bei einer gasgekühlten elektrischen Maschine der eingangs genannten Gattung dadurch gelöst, dass erfindungsgemäss im Ausströmquerschnitt der endseitigen Heissgaskammern zwischen diesen und dem Kühler Drosselorgane angeordnet sind.

Auf diese Weise lässt sich der Kühlluftstrom der Maschine nahezu beliebig auf die unterschiedlichen Kammern aufteilen und somit eine weitgehende Vergleichmässig der Maschinentemperatur in Maschinenlängsrichtung erreichen.

Die Drosselorgane bestehen vorzugsweise aus den gesamten Querschnitt überdeckenden Blechplatten, die mit einer Vielzahl von Durchbrüchen versehen sind. Zur Einstellung des wirksamen Querschnitts dient dabei gemäss einer besonders vorteilhaften Weiterbildung eine Lochplatte, die auf der Blechplatte aufliegt und ebenfalls mit Druchbrüchen versehen ist. Durch Verschieben der beiden Platten relativ zu einander lässt sich eine Feineinstellung des wirksamen Querschnitts bewirken.

Die Erfindung eignet sich insbesondere für das nachträgliche kühltechnische Tuning von bereits ausgeführten Maschinen, weil keine Eingriffe in die Maschine selbst vorgenommen werden müssen. In den Luftführungen von den Heissgaskammern zu den regelmässig in der Fundamentgrube unterhalb der Maschine angeordneten Kühlern ist hingegen genügend Platz und auch wegungsfreiheit für das Montagepersonal vorhanden, um die Drosselorgane einbauen und einstellen zu können.

### KURZE BESCHREIBUNG DER ZEICHNUNGEN

Die Erfindung wird nachstehend anhand von Ausführungsbeispielen näher erläutert. In der Zeichnung zeigt
- Fig. 1: einen vereinfachten Längsschnitt eines luftgekühlten Generators bekannter Bauart mit offenem Kühlkreislauf, mit Drosselorganen am Austritt der endseitigen Heissgaskammern;
- Fig. 2: einen vergrösserten Ausschnitt von Fig.1, dass die Lage und Ausbildung der Drosselorgane verdeutlicht;
- Fig. 3: eine Draufsicht auf ein Drosselorgan mit einstellbarem Querschnitt;
- Fig. 4: eine alternative Ausführungsform eines Drosselorgans mit kreisrunden Durchbrüchen;
- Fig.5: eine weitere Variante eines Drosselorgans, bestehend aus voneinander distanzierten Blechplatten und einer zugehörigen Schlitzplatte.

### WEGE ZUR AUSFÜHRUNG DER ERFINDUNG

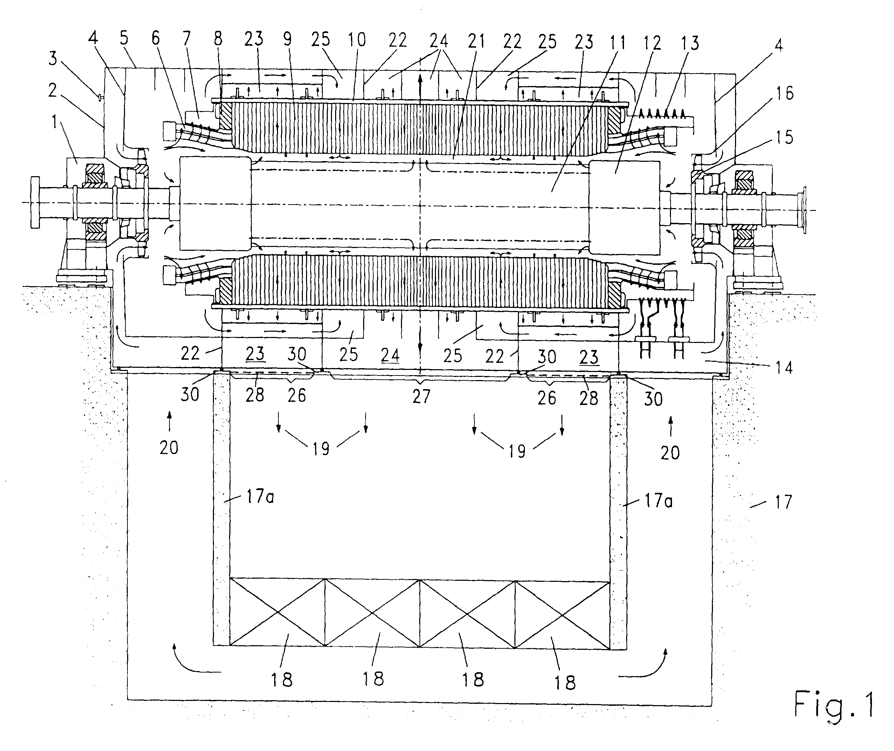

In Fig.1 ist mit 1 ein Bocklager, mit 2 eine Aussenverschalung, mit 4 eine Innenverschalung und mit 5 ein Maschinengehäuse bezeichnet. Der Wickelkopf 6 stützt sich an Abstützplatten 7 an einer Statorpressplatte 8 ab. Im Statorblechkörper 9 sind radiale Belüftungsschlitze zwischen den einzelnen Teilblechkörpern vorgesehen. Zugstangen 10 pressen den Statorblechkörper samt Statorpressplatten 8 zusammen. Der Rotor 11 weist an beiden Enden Rotorkappen 12 auf. Die Wicklungsverbindungen im Wickelkopfraum sind mit 13 bezeichnet, die Phasen- und Sternpunktklemmen mit 14. An beiden Maschinenende ist je ein Axialventilator 15 vorgesehen. Das radial innere Ende der Innenverschalung 4 ist als Luftführungsring 16 ausgebildet. In einer Fundamentgrube 17 unterhalb der Maschine sind Kühler 18 vorgesehen. Die Heissluft vor den Kühlern 18 ist durch Pfeile 19, die Kaltluft nach den Kühlern durch Pfeile 20 gekennzeichnet. Andere (nicht näher bezeichnete) Pfeile verdeutlichen die verschiedenen Kühlluftströme im Maschineninneren. Im nachfolgenden ist nur eine Maschinenhälfte zu betrachten, da die Maschine - was die Kühlung betrifft - symmetrisch aufgebaut ist

Kalte Luft gelangt von den Kühlern 18 und den Raum zwischen Aussenverschalung 2 und Innenverschalung 4 zum Ventilator 15. Dann verzweigt sich der Kühlluftstrom. Ein erster Teilstrom strömt durch den Rotorwickelkopf unter der Rotorkappe 12, ein zweiter strömt in den Maschinenluftspalt 21, ein dritter Kühlluftstrom gelangt durch den Wickelkopfraum in den Maschinenrücken, also dem Raum zwischen Maschinengehäuse 5 und Statorblechkörper 9.

Im Maschinenrücken sind durch Gehäusespanten 22 und radiale und axiale Trennwände Kalt- und Heissgaskammer gebildet. Im Beispielsfall je eine Heisgaskammer 23 an beiden Maschinenenden und eine Heissgaskammer 24 in Maschinenmitte, sowie je eine Kaltgaskammer 25 zwischen den Kammern 23 und 24. In letztere strömt der genannte dritte Kühlluftstrom vom Ventilator 15 ein, wird durch die Belüftungsschlitze zwischen den Teilblechpakten des Statorblechkörpers 9 gepresst und gelangt in die genannten Heisgaskammern 23 und 24. Von den Heisgaskammern 23 und 24 gelangt das heisse Kühlgas über grossflächige Durchbrüche 26 bzw. 27 an der Unterseite des Maschinengehäuses 5 in die Fundamentgrube und dort zu den Kühlern 18.

Insoweit entspricht der Aufbau und die Kühlluftführung der aus "Brown Boveri Technik" a.a.O. bekannten Maschine. Obwohl bei der Auslegung der Maschine die Anordnung und Aufteilung der in die verschiedenen Kammern ein- bzw. austretenden Luftströme die unterschiedlichen Strömungswiderstände berücksichtigt worden sind, kann sich doch beim späteren Betrieb herausstellen, dass die Kühlwirkung in Maschinenmitte weniger effektiv ist als an den Maschinenenden. Eine nachträgliche Anpassung durch Ein- und/oder Umbau der verschiedenen Leit- und Trenneinrichtungen im Statorrücken ist dabei nur bedingt - wenn überhaupt - möglich. Hier setzt nun die Erfindung ein.

Ihr liegt dabei die Idee zugrunde, die Aufteilung der einzelnen Volumenströme durch die Kalt- und Heissgaskammern nicht innerhalb des Maschinengehäuses sondern am Austritt aus der Maschine auf dem Weg zu den Kühlern 18 zu beeinflussen. Zu diesem Zweck sind in den Durchbrüchen 26, die den beiden endseitigen Heissgaskammern 23 zugeordnet sind, Drosselorgane 28 (in Fig.1 durch strichlierte Linien symbolisiert) vorgesehen, welche vorzugsweise einstellbar den Strömungsquerschnitt von den Heissgaskammern 23 zu den Kühlern 18 einengen.

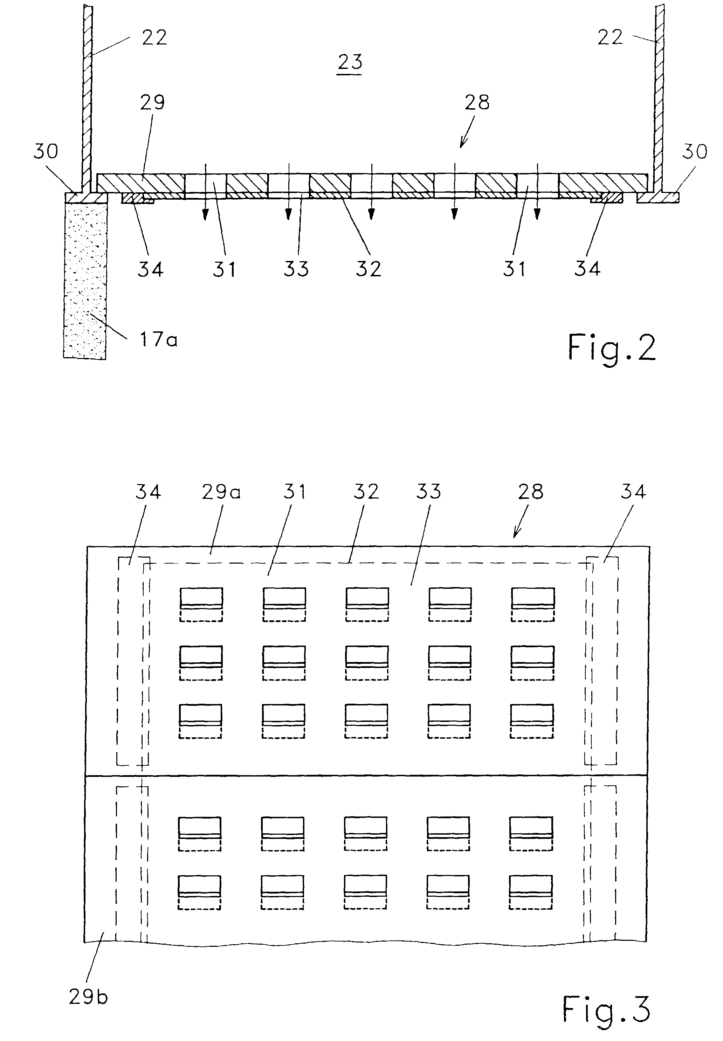

In Fig.2, die einen vergrösserten Ausschnitt von Fig.1 zeigt, ist die Lage und Ausbildung dieser Drosselorgane verdeutlicht. Jedes Drosselorgan 28 besteht aus einer ein- oder mehrteiligen Blechplatte 29, die auf einem Rahmen 30 befestigt ist. Dieser Rahmen 30 ist Teil des Maschinengehäuses und ruht auf der einen Seite auf einem Sockel 17a des Fundaments 17. In der Blechplatte 29 sind regelmässig verteilt Durchbrüche 31 vorgesehen. Von unten her ist an der Unterseite der Blechplatte 29 eine zweite, gegenüber der Blechplatte 29 horizontal verschiebbare Lochplatte 32 befestigt, die gleichfalls mit Durchbrüchen 33 versehen ist. Diese Durchbrüche 33 entsprechen hinsichtlich Form und Verteilung den Durchbrüchen 31 der Blechplatte 29. Seitliche Führungsleisten 34, die am der Unterseite der Blechplatte 29 befestigt sind, dienen als Montagehilsmittel.

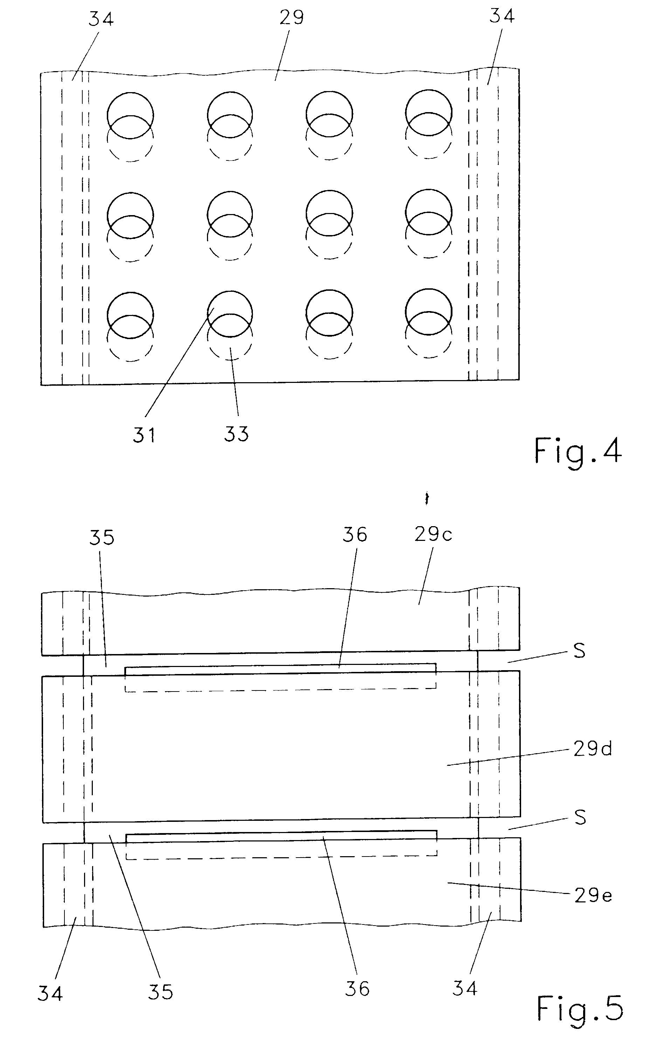

Die Blechplatte 29 ist vorzugsweise mehrteilig ausgeführt (Teile 29a und 29b in Fig.3), um sie leicht von unten her in die Heisgaskammer 23 einbringen zu können. Die Lochplatte 32 hingegen kann einteilig ausgeführt sein. Wie aus der Draufsicht auf das Drosselorgan gemäss Fig.3 ohne weiteres hervorgeht, kann durch Verschieben der Lochplatte 32 gegenüber der Blechplatte 29 in Richtung der Führungsschienen 34 der wirksame Querschnitt der Durchbrüche 31 in der Blechplatte 29 zwischen wohldefinierten Grenzen variiert werden und damit auch der wirksame Querschnitt am Austritt der beiden äusseren Heisgaskammern 23 hin zu den Kühlern 18 innerhalb vorgegebener Werte verändert werden.

Die nachfolgenden, aus der Praxis gewonnenen Werte sollen verdeutlichen, wie das Drosselorgan bei einer realen Maschine zur Vergleichmässigung der Kühlung in Maschinenlängsrichtung beitragen kann:

Messungen haben ergeben, dass etwa zwei Drittel der Stator-Kühlluftmenge in die endseitigen Heissgaskammern 23 und nur ein Drittel in die mittlere Heisgaskammer 24 strömt. Als Folge davon erwärmt sich der mittlere Abschnitt der Maschine unzulässig hoch. Durch Rechnungen und Messungen an der realen Maschine im Betrieb gestützte Abschätzungen ergaben, dass etwa 60 bis 80% der gesamten Kühlluftmenge durch den mittleren Maschinenabschnitt (Heissgaskammer 24) zu führen sind, um eine annähernd konstante Temperatur in Maschinenlängsrichtung zu erzielen. Zu diesem Zweck musste der durchströmte Querschnitt in den beiden endseitigen Heissgaskammern 23 von je etwa 3 m² auf Werte zwischen 0,1 und 0,2 m² reduziert werden, um diese Luftmengenaufteilung zu erreichen. Durch den Einbau von je einer Blechplatte 29 mit Durchbrüchen 31 in die beiden endseitigen Heissgaskammern 23 mit einer Gesamt-Durchtrittsfläche von 0,2 m² und einer enstsprechend ausgestalteten Lochplatte 32 liess sich das gesteckte Ziel ohne weiteres erreichen. Ueberraschenderweise erhöhte sich der Lärmpegel der Maschine durch die Einengung des Strömungs-Querschnitts in den Heisgaskammern nur unwesentlich, was auf die hier herrschenden vergleichsweise geringen mungsgeschwindigkeiten zurückzuführen ist.

Anstelle von Durchbrüchen 31, 33 mit rechteckförmigem Querschnitt können auch solche mit anderen Querschnitten, z.B. kreisrunde, wie in Fig.4 dargestellt, vorgesehen werden. Auch müssen die Durchbrüche nicht unbedingt über die gesamte Fläche der Blechplatte 29 verteilt sein, sondern können beispielsweise im mittigen Bereich konzentriert sein. Statt einer bzw. mehrerer dicht aneinanderliegender, mit Durchbrüchen versehener Blechplatten 29 bzw. 29a, 29b können als Drosselorgan auch mehrere Blechplatten verwendet werden, die zwischen sich jeweils einen Spalt freilassen. Auch eine solche Lösung ist in Kombination mit einer modifizierten Lochplatte realisierbar, wie aus Fig.5 hervorgeht.

Die Blechplatte besteht aus mehreren Teilen 29c, 29d und 29e, die voneinander durch einen Spalt S distanziert sind. An die Stelle der Lochplatte 33 tritt eine Schlitzplatte 35, die Schlitze 36 aufweise, die parallel zu den Spaltkanten verlaufen.

Des weiteren braucht es nicht notwendigerweise eine mit Durchbrüchen versehene Blechplatte und eine zugehörige Lochplatte bzw. Schlitzplatte. Sind nämlich einmal die optimalen Querschnitte durch Versuche bestimmt, so kann auch eine dementsprechend ausgestaltete Blechplatte bzw. entsprechend distanzierte Teilplatten mit einer Gesamtdurchtrittsfläche ebendieser Grösse eingebaut werden.

Die Erfindung wurde im vorstehenden anhand einer luftgekühlten Maschine mit drei Heisgaskammern und zwei Kaltgaskammern erläutert. Selbstverständlich kann die Erfindung auch bei Maschinen mit mehr als drei Heissgaskammern und mehr als zwei Kaltgaskammern realisiert werden. Gegebenenfalls müssten dann nicht nur in den äusseren sondern auch in den anderen Heissgaskammern, die zwischen den äusseren und der mittigen Heissgaskammer liegen, Drosselorgane der beschriebenen Art eingebaut werden.

### BEZEICHNUNGSLISTE

- 1: Bocklager
- 2: Aussenverschalungen
- 3:
- 4: Innenverschalungen
- 5: Maschinengehäuse
- 6: Wickelköpfe
- 7: Abstützplatten für 6
- 8: Statorpressplatten
- 9: Statorblechkörper
- 10: Zugstangen
- 11: Rotor
- 12: Rotorkappen
- 13: Wicklungsverbindungen
- 14: Phasen- und Sternpunktklemmen
- 15: Axialventilator
- 16: Luftführungsring an 4
- 17: Fundamentgrube
- 17a: Fundamentsockel
- 18: Kühler
- 19: Heissluft vor 18
- 20: Kaltluft nach 18
- 21: Maschinenluftspalt
- 22: Gehäusespanten
- 23: endseitige Heissgaskammern
- 24: mittlere Heissgaskammer
- 25: Kaltgaskammern
- 26,27: Durchbrüche in 5
- 28: Drosselorgane
- 29: Blechplatte
- 29a,..: Teilblechplatten
- 30: Fundamentrahmen
- 31: Durchbrüche in 29
- 32: Lochplatte
- 33: Durchbrüche in 32
- 34: Führungsleisten für 32
- 35: Schlitzplatte
- 36: Schlitze in 35
- S: Spalt zwischen 29c und 29d...

## Patentansprüche

1. Elektrische Maschine mit einem auf einem Fundament (17) mit einer Fundamentgrube angeordneten Gehäuse (5), einem in diesem Gehäuse angeordnetem Statorblechkörper (9) mit in Nuten an seinem Innenumfang angeordnetem indirekt gekühlten Statorwicklungsleitern und einem Rotor (11), wobei der Blechkörper (9) des Stators aus einzelnen, durch Distanzstege voneinander beabstandeten Teilblechpaketen gebaut ist und die Zwischenräume zwischen zwei aufeinanderfolgenden Teilblechpaketen radial verlaufende Kühlschlitze bilden, und die Kühlschlitze den Maschinenluftspalt (21) mit Kammern verbinden, die zwischen dem Aussenumfang des Statorblechkörpers und dem Gehäuse gelegen sind, welche Kammern Kaltgaskammern (25) umfassen, die von kaltem Kühlgas beaufschlagbar sind, und welche Kammern Heissgaskammern (23,24) umfassen, in welche erwärmtes Kühlgas aus den besagten Kühlschlitzen radial auswärts gerichtet einströmt, welche Heissgaskammern mit Kühlern (18) in Verbindung stehen, und wobei Kühlgas-Fördermittel (15) und Kühlgas-Leiteinrichtungen (4) an beiden Maschinenenden, vorgesehen sind, welche das gekühlte Gas als Kaltgas den Kaltgaskammern zuleiten und das aufgewärmte Kühlgas aus den Heissgaskammern wieder absaugen, dadurch gekennzeichnet, dass im Ausströmquerschnitt (26) der endseitigen Heissgaskammern (23) zwischen diesen und dem Kühler (18) Drosselorgane (28) angeordnet sind.

2. Maschine nach Anspruch 1, dadurch gekennzeichnet, dass das Drosselorgan eine aus einer, vorzugsweise mehreren Blechplatten (29) besteht, welche mit Durchbrüchen (31) versehen ist.

3. Maschine nach Anspruch 2, dadurch gekennzeichnet, dass die Blechplatte (29) mit einer Lochplatte (32) zusammenwirkt, deren Durchbrüche (33) derart angeordnet und verteilt sind, dass durch Verschieben der Lochplatte (32) relativ zur Blechplatte (29) eine vorbestimmte wirksame Querschnittsverengung erreichbar ist.

4. Maschine nach Anspruch 2 oder 3, dadurch gekennzeichnet, dass zur Vereinfachung der Montage/Demontage zumindest die Blechplatte (29) in mehrere Teilplatten (29a,29b) unterteilt ist.

5. Maschine nach Anspruch 2 oder 3, dadurch gekennzeichnet, dass die Blechplatte aus mehreren voneinander distanzierten Teilplatten (29c,29d,29e) besteht, die zwischen sich einen Spalt (S) freilassen.

6. Maschine nach Anspruch 5, dadurch gekennzeichnet, dass die Teilplatten (29c,29d,29e) mit einer Schlitzplatte (35) zusammenwirken, deren Schlitze (36) derart angeordnet und verteilt sind, dass durch Verschieben der Schlitzplatte (36) relativ zu den Teilplatten eine vorbestimmte wirksame Querschnittsverengung erreichbar ist.

## Claims

1. Electrical machine having a housing (5) which is arranged on a foundation (17) having a foundation pit, having a laminated stator core (9) which is arranged in this housing and has stator winding conductors which are arranged in slots on the internal circumference of said laminated stator core and are cooled indirectly, and having a rotor (11), the laminated core (9) of the stator being constructed from individual laminated core elements which are separated from one another by spacer webs, and the intermediate spaces between two successive laminated core elements forming radially running cooling slits, and the cooling slits connecting the machine air gap (21) to chambers which are located between the external circumference of the laminated stator core and the housing, which chambers comprise cold-gas chambers (25), which can be acted on by cold cooling gas, and hot-gas chambers (23, 24) into which heated cooling gas flows, directed radially outwards from said cooling slits, which hot-gas chambers are connected to coolers (18), and cooling-gas conveying means (15) and cooling-gas guidance devices (4) being provided at both machine ends, which means and devices supply the cooled gas to the cold-gas chambers as cold gas and suck the heated cooling gas out of the hot-gas chambers again, characterized in that restrictor devices (28) are arranged in the outlet cross-section (26) of the hot-gas chambers (23) at the ends, between said chambers and the cooler (18).

2. Machine according to Claim 1, characterized in that the restrictor device comprises a [sic] a metal plate, preferably a plurality of metal plates (29), which is or are provided with perforations (31).

3. Machine according to Claim 2, characterized in that the metal plate (29) interacts with a perforated plate (32) whose perforations (33) are arranged and distributed in such a manner that a predetermined effective cross-sectional constriction can be achieved by displacing the perforated plate (32) relative to the metal plate (29).

4. Machine according to Claim 2 or 3, characterized in that at least the metal plate (29) is divided into a plurality of plate elements (29a, 29b) in order to simplify assembly/disassembly.

5. Machine according to Claim 2 or 3, characterized in that the metal plate comprises a plurality of plate elements (29c, 29d, 29e) which are spaced apart from one another and leave a gap (S) free between them.

6. Machine according to Claim 5, characterized in that the plate elements (29c, 29d, 29e) interact with a slitted plate (35) whose slits (36) are arranged and distributed in such a manner that a predetermined effective cross-sectional constriction can be achieved by displacing the slitted plate (36) relative to the plate elements.

## Revendications

1. Machine électrique munie d'un boîtier (5) disposé sur une fondation (17) comprenant une tranchée de fondation, un corps en tôle (9) du stator disposé dans ce boîtier avec des conducteurs d'enroulement du stator refroidis de façon indirecte disposés dans les encoches sur le pourtour intérieur et un rotor (11), le corps en tôle (9) du stator étant constitué de paquets de tôle individuels séparés les uns des autres par des entretoises d'écartement et les espaces intermédiaires entre deux paquets de tôle successifs formant des fentes de refroidissement s'étendant dans le sens radial, et les fentes de refroidissement reliant l'entrefer de la machine (21) avec des chambres, lesquelles sont logées entre le pourtour extérieur du corps en tôle du stator et le boîtier, lesquelles chambres comprennent des chambres de gaz froid (25), lesquelles sont alimentées par du gaz de refroidissement froid, et lesquelles chambres comprennent des chambres de gaz chaud (23, 24) dans lesquelles se diffuse du gaz de refroidissement échauffé en provenance desdites fentes de refroidissement dans le sens radial de façon directive vers l'extérieur, lesquelles chambres de gaz chaud sont en liaison avec des refroidisseurs (18), et des moyens d'alimentation en gaz de refroidissement (15) ainsi que des dispositifs de conduite (4) du gaz de refroidissement étant prévus sur les deux extrémités de la machines, lesquels acheminent le gaz refroidi sous la forme de gaz froid vers les chambres de gaz froid et aspirent à nouveau le gaz de refroidissement échauffé hors des chambres de gaz chaud, caractérisée par le fait que des éléments d'obturation (28) sont disposés dans la section d'évacuation (26) des chambres de gaz chaud (23) des extrémités entre celles-ci et les refroidisseurs (18).

2. Machine selon la revendication 1, caractérisée par le fait que l'élément d'obturation est composé d'une, de préférence de plusieurs plaques de tôle (29), lesquelles sont munies de traversées (31).

3. Machine selon la revendication 2, caractérisée par le fait que la plaque de tôle (29) agit conjointement avec une plaque perforée (32), dont les traversées (33) sont disposées et réparties de telle façon qu'en faisant coulisser la plaque perforée (32) par rapport à la plaque de tôle (29), il est possible d'obtenir un rétrécissement prédéfini de la section efficace.

4. Machine selon la revendication 2 ou 3, caractérisée par le fait qu'au moins la plaque de tôle (29) est séparée en plusieurs plaques partielles (29a, 29b) afin de simplifier le montage/démontage.

5. Machine selon la revendication 2 ou 3, caractérisée par le fait que la plaque de tôle est composée de plusieurs plaques partielles (29c, 29d, 29e) écartées les unes des autres qui laissent entre elles un entrefer (S) libre.

6. Machine selon la revendication 5, caractérisée par le fait que les plaques partielles (29c, 29d, 29e) agissent conjointement avec une plaque fendue (35) dont les fentes (36) sont disposées et réparties de telle façon qu'en faisant coulisser la plaque fendue (36) par rapport aux plaques partielles, il est possible d'obtenir un rétrécissement prédéfini de la section efficace.
